# EUROPÄISCHE PATENTANMELDUNG

(11) **EP 3 862 076 A1**
(43) Veröffentlichungstag der Anmeldung: **11.08.2021**
(21) Anmeldenummer: 20156463.0
(22) Anmeldetag: 10.02.2020
(51) Int. Cl.: B01J 8/06, B01J 19/24

(54) **REAKTOR UND VERFAHREN ZUR DURCHFÜHRUNG EINER CHEMISCHEN REAKTION**

(71) Anmelder: Linde GmbH, 82049 Pullach (DE); BASF SE, 67056 Ludwigshafen am Rhein (DE)
(72) Erfinder: Zellhuber, Dr. Mathieu, 82152 Martinsried (DE); Hofstätter, Martin, 81369 München (DE); Posselt, Dr. Heinz, 83043 Bad Aibling (DE); Lang, Christian, 81479 München (DE); Delhomme-Neudecker, Dr. Clara, 81825 München (DE)
(74) Vertreter: DehnsGermany Partnerschaft von Patentanwälten

(57) **Zusammenfassung**

Die Erfindung betrifft einen Reaktor (100, 200) zur Durchführung einer chemischen Reaktion, der einen Reaktorbehälter (10) und ein oder mehrere Reaktionsrohre (20) aufweist, wobei eine Anzahl von Rohrstrecken (21, 22) des einen oder der mehreren Reaktionsrohre (20) jeweils zwischen einem ersten Bereich (11) und einem zweiten Bereich (12) in dem Reaktorbehälter (10) verlaufen, und wobei die Rohrstrecken in dem ersten Bereich (11) zur Beheizung der Rohrstrecken (21, 22) jeweils elektrisch mit den Phasenanschlüssen einer mehrphasigen Wechselstromquelle (50) verbindbar sind. Die Erfindung umfasst, dass die Rohrstrecken (21, 22) in dem zweiten Bereich (12) insgesamt mittels eines einzigen starren Verbindungselements (30) oder gruppenweise mittels mehrerer starrer Verbindungselemente (30), das oder die einstückig mit dem einen oder den mehreren Reaktionsrohren (20) verbunden und innerhalb des Reaktorbehälters (10) angeordnet ist oder sind, elektrisch leitend miteinander verbunden sind. Ein entsprechendes Verfahren ist ebenfalls Gegenstand der vorliegenden Erfindung.

## Beschreibung

Die Erfindung betrifft einen Reaktor und ein Verfahren zur Durchführung einer chemischen Reaktion gemäß den Oberbegriffen der unabhängigen Patentansprüche.

### Stand der Technik

In einer Reihe von Verfahren in der chemischen Industrie werden Reaktoren eingesetzt, in denen ein oder mehrere Reaktanden durch beheizte Reaktionsrohre geführt und dort katalytisch oder nichtkatalytisch umgesetzt werden. Die Beheizung dient dabei insbesondere dazu, die benötigte Aktivierungsenergie für die ablaufende chemische Reaktion zu überwinden. Die Reaktion kann insgesamt endotherm oder, nach Überwindung der Aktivierungsenergie, exotherm ablaufen. Die vorliegende Erfindung betrifft insbesondere stark endotherme Reaktionen.

Beispiele für solche Verfahren sind das Steamcracken (Dampfspalten), unterschiedliche Reformierungsverfahren, insbesondere die Dampfreformierung, die Trockenreformierung (Kohlendioxidreformierung), gemischte Reformierungsverfahren, Verfahren zur Dehydrierung von Alkanen und dergleichen. Beim Steamcracken werden die Reaktionsrohre dabei in Form von Rohrschlangen (engl. Coils), die im Reaktor einen Umkehrpunkt aufweisen können, durch den Reaktor geführt, wohingegen bei der Dampfreformierung typischerweise ohne Umkehrpunkt durch den Reaktor verlaufende Rohre verwendet werden.

Die Erfindung eignet sich für alle derartigen Verfahren und Ausgestaltungen von Reaktionsohren. Rein illustrativ wird hier auf die Artikel "Ethylene", "Gas Production" und "Propene" in Ullmann's Encyclopedia of Industrial Chemistry, beispielsweise die Publikationen vom 15 April 2009, DOI: 10.1002/14356007.a10_045.pub2, vom 15. Dezember 2006, DOI: 10.1002/14356007.a12_169.pub2, und vom 15. Juni 2000, DOI: 10.1002/14356007.a22_211, verwiesen.

Die Reaktionsrohre von entsprechenden Reaktoren werden herkömmlicherweise durch Verwendung von Brennern beheizt. Die Reaktionsrohre werden dabei durch eine Brennkammer geführt, in der auch die Brenner angeordnet sind.

Wie beispielsweise in der DE 10 2015 004 121 A1 (zugleich EP 3 075 704 A1) beschrieben, steigt gegenwärtig jedoch beispielsweise die Nachfrage nach Synthesegas und Wasserstoff, die ohne oder mit reduzierten lokalen Kohlendioxidemissionen hergestellt werden. Diese Nachfrage kann aber durch Verfahren, in denen befeuerte Reaktoren eingesetzt werden, aufgrund der Verfeuerung typischerweise fossiler Energieträger nicht bedient werden. Andere Verfahren scheiden beispielsweise aufgrund hoher Kosten aus. Entsprechendes gilt auch für die Bereitstellung von Olefinen und/oder anderer Kohlenwasserstoffe durch Steamcracken oder Dehydrierung von Alkanen. Auch in solchen Fällen besteht der Wunsch nach Verfahren, die zumindest vor Ort geringere Mengen an Kohlendioxid emittieren.

Vor diesem Hintergrund wird in der erwähnten DE 10 2015 004 121 A1 eine elektrische Beheizung eines Reaktors zur Dampfreformierung zusätzlich zu einer Befeuerung vorgeschlagen. Hierbei werden eine oder mehrere Spannungsquellen verwendet, die eine Dreiphasenwechselspannung an drei Außenleitern bereitstellt oder bereitstellen. Jeder Außenleiter wird an einem Reaktionsrohr angeschlossen. Es wird eine Sternschaltung gebildet, bei der ein Sternpunkt durch einen Sammler realisiert wird, in den die Rohrleitungen einmünden, und mit dem die Reaktionsrohre leitend verbunden sind. Auf diese Weise bleibt der Sammler idealerweise potentialfrei. Der Sammler ist bezogen auf die Vertikale unterhalb sowie außerhalb der Brennkammer angeordnet und erstreckt sich bevorzugt quer zu den Reaktorrohren bzw. entlang der Horizontalen.

Eine entsprechende elektrische Beheizung eines Reaktors kann in Fällen, in denen kein Sammler der erläuterten Art vorhanden ist, problematisch sein, beispielsweise bei Reaktoren, in denen die Reaktionsrohre einen Umkehrpunkt im Reaktor aufweisen, an dem sie an den Sternpunkt angeschlossen werden sollen, wie beispielsweise auch in der WO 2015/197181 A1 der Fall. Aufgrund der hohen Stromflüsse und Temperaturen in dem Reaktor ist eine Lösung zum elektrischen Verbinden der Reaktorrohre am Sternpunkt mit zufriedenstellenden Stromübergangswerten zur Verminderung von übermäßigen Verlustleistungen und zur Gewährleistung eines gleichverteilten Stromflusses und damit der Potentialfreiheit des Sternpunkts schwierig.

Die vorliegende Erfindung stellt sich daher die Aufgabe, entsprechende elektrisch beheizte Reaktoren zur Durchführung chemischer Reaktionen zu verbessern.

### Offenbarung der Erfindung

Vor diesem Hintergrund schlägt die vorliegende Erfindung einen Reaktor und ein Verfahren zur Durchführung einer chemischen Reaktion gemäß den Oberbegriffen der unabhängigen Patentansprüche vor. Ausgestaltungen sind jeweils Gegenstand der abhängigen Patentansprüche sowie der nachfolgenden Beschreibung.

In dem zumeist teilweise elektrifizierten Ofenkonzept (der Begriff "Ofen" wird üblicherweise zur Bezeichnung eines entsprechenden Reaktors bzw. zumindest von dessen thermisch isoliertem Reaktionsraum verstanden), das der vorliegenden Erfindung zugrunde liegt, wird zumindest eines der Reaktionsrohre bzw. entsprechende Rohrstrecken hiervon (nachfolgend auch kurz als "Rohre" bezeichnet) selbst als elektrische Widerstände benutzt, um Wärme zu erzeugen. Dieser Ansatz hat den Vorteil eines höheren Wirkungsgrads im Vergleich zu einer indirekten Erwärmung durch externe elektrische Heizkörper sowie einer höheren erreichbaren Wärmestromdichte. Im Rahmen der Erfindung wird die Möglichkeit eingeschlossen, einen Teil der gesamten im Ofen aufgewandten Heizleistung auch über Verfeuerung anderer Energieträger, beispielsweise von fossilen Energieträgern wie Erdgas aber auch von Energieträgern wie sogenanntem Bioerdgas oder Biomethan, bereitzustellen.

Ist daher hier von einer elektrischen Beheizung die Rede, schließt dies das Vorhandensein einer zusätzlichen nichtelektrischen Beheizung nicht aus. Es kann insbesondere auch vorgesehen sein, die Beiträge der elektrischen und nichtelektrischen Beheizung über die Zeit zu variieren, beispielsweise in Abhängigkeit von Stromangebot und -preis bzw. Angebot und Preis nichtelektrischer Energieträger wie zuvor erwähnt.

Die Stromeinspeisung erfolgt in die direkt beheizten Reaktionsrohre über M separat angeschlossene Phasen. Die stromleitenden Reaktionsrohre, die mit den M Phasen verbunden sind, müssen an einen Sternpunkt ebenfalls elektrisch verbunden werden. Die Phasenzahl M beträgt insbesondere 3, entsprechend der Phasenzahl üblicher Drehstromquellen bzw. -netze. Grundsätzlich ist die vorliegende Erfindung aber nicht auf die Verwendung von drei Phasen beschränkt, sondern kann auch mit einer größeren Phasenzahl, beispielsweise einer Phasenzahl von 4, 5, 6, 7 oder 8, verwendet werden. Besonders bevorzugt ist ein Vielfaches von 3, beispielsweise 6, 9, 12 usw. Ein Phasenversatz beträgt dabei insbesondere 360°/M, d.h. bei einem dreiphasigen Drehstrom 120°.

Durch die Sternschaltung am Sternpunkt wird ein Potentialausgleich zwischen den Phasen erreicht, was eine elektrische Isolierung der angeschlossenen Rohrleitungen überflüssig macht. Dies stellt einen besonderen Vorteil eines derartigen Ofenkonzepts dar, da eine Unterbrechung der metallischen Reaktionsrohre zur Isolierung bestimmter Abschnitte insbesondere aufgrund der verwendeten hohen Temperaturen und des damit erforderlichen hohen Material- und Konstruktionsaufwands unerwünscht ist.

Im Sprachgebrauch der Patentansprüche betrifft die vorliegende Erfindung dabei einen Reaktor zur Durchführung einer chemischen Reaktion, der einen Reaktorbehälter (d.h. einen thermisch isolierten oder zumindest teilweise isolierten Bereich) und ein oder mehrere Reaktionsrohre aufweist, wobei eine Anzahl von Rohrstrecken des einen oder der mehreren Reaktionsrohre jeweils zwischen einem ersten Bereich und einem zweiten Bereich innerhalb des Reaktorbehälters und durch einen Zwischenbereich zwischen dem ersten und dem zweiten Bereich verlaufen, und wobei die Rohrstrecken in dem ersten Bereich zur elektrischen Beheizung der Rohrstrecken jeweils elektrisch mit den Phasenanschlüssen ("Außenleitern") einer mehrphasigen Wechselstromquelle verbunden oder verbindbar sind, beispielsweise mittels Stromschienen und Anschlussbändern. Schaltvorrichtungen können insbesondere auf einer Primärseite eines verwendeten Transformatorsystems installiert sein, weil dort eine höhere Spannung und ein niedrigerer Strom vorliegen.

Wie erwähnt, wird dabei über die Phasenanschlüsse jeweils eine Wechselspannung bereitgestellt und die Wechselspannungen der Phasenanschlüsse sind in der oben erläuterten Weise phasenverschoben. Als Wechselstromquelle kann im Rahmen der vorliegenden Erfindung beispielsweise ein Versorgungsnetz oder ein geeigneter Generator und/oder Transformator dienen. Durch die Rohrstrecken wird eine Sternschaltung gebildet, in der diese an ihrem jeweils der Stromeinspeisung entgegengesetzten Ende, d.h. in dem zweiten Bereich, elektrisch leitend miteinander gekoppelt werden.

In dem Zwischenbereich verlaufen die Rohrstrecken insbesondere frei, d.h. ohne eine mechanische Abstützung, ohne elektrische Kontaktierung und/oder ohne fluidische oder rein mechanische Querverbindungen miteinander durch den Reaktorbehälter. Sie verlaufen in dem Zwischenbereich insbesondere im Wesentlichen oder vollständig gerade, wobei unter "im Wesentlichen Gerade" verstanden werden soll, dass eine Winkelabweichung von weniger als 10°oder 5°vorlie gt.

Gemäß der vorliegenden Erfindung sind die Rohrstrecken in dem zweiten Bereich insgesamt mittels eines einzigen starren Verbindungselements ("Sternbrücke"), das einstückig mit dem einen oder den mehreren Reaktionsrohren verbunden und innerhalb des Reaktorbehälters angeordnet ist, elektrisch leitend miteinander verbunden, oder diese Verbindung erfolgt gruppenweise mittels mehrerer solcher starrer Verbindungselemente. Das eine oder die mehreren Verbindungselemente koppelt bzw. koppeln die jeweils damit elektrisch verbundenen Rohrstrecken dabei maximal paarweise fluidisch miteinander. Unter "maximal paarweise" soll dabei verstanden werden, dass maximal eine in das Verbindungselement eintretende Rohrstrecke mit maximal einer anderen in das Verbindungselement eintretenden (bzw. im Sinne der Strömungsrichtung, aus diesem austretenden) Rohrstrecke fluidisch gekoppelt ist, oder dass, mit anderen Worten, die jeweils paarweise fluidisch über das Verbindungselement verbundenen Rohrstrecken jeweils im Wesentlichen dieselben Fluidmengen pro Zeiteinheit führen bzw. dafür ausgelegt sind. In diesem konkreten Zusammenhang soll unter "im Wesentlichen dieselben Fluidmengen" ein Unterschied von nicht mehr als 10%, 5% oder 1% verstanden werden. Das eine oder die mehreren Verbindungselemente koppelt bzw. koppeln die verbundenen Rohrstrecken also nicht sammelnd und nicht verteilend, im Gegensatz zu einem aus dem Stand der Technik bekannten, außerhalb des Reaktors angeordneten Sammler.

Diese erfindungsgemäß vorgeschlagene Maßnahme hat den Vorteil, dass ein maximaler Potentialausgleich über eine oder mehrere mittels des einen oder der mehreren Verbindungselemente ausgebildete Sternbrücken erfolgen kann. Damit ergibt sich eine nahezu vollständige Potentialfreiheit bzw. eine deutlich reduzierte Stromrückführung über einen ggf. daran angeschlossenen Neutralleiter. Eine minimale Stromabfuhr über die Headeranschlüsse hin zu anderen Teilen der Prozessanlage und eine weitgehende Berührsicherheit ist die Folge.

Ein weiterer Vorteil des einen oder der mehreren erfindungsgemäß vorgeschlagenen Verbindungselemente gegenüber einem oder mehreren außerhalb des Reaktorbehälters angeordneten Sammlern, der oder die ggf. ebenfalls eine elektrische Verbindung an einem Sternpunkt bereitstellt bzw. bereitstellen, besteht in einer klarer definierten Strecke des elektrischen Wärmeeintrags (z.B. über alle Rohrstrecken gleichmäßig, was bei einem Sternpunkt an einem Sammler nicht der Fall ist, weil hierbei elektrisch beheizte Rohrabschnitte von dem wärmeren Innenraum zu dem kälteren Außenraum geführt werden müssen) und räumlich sehr homogenen äußeren thermischen Randbedingungen der elektrisch beheizten Rohrstrecken (keine elektrische Beheizung in den thermisch isolierten Durchtritten durch den Reaktorbehälter zu dem auf niedriger Temperatur betriebenen Sammler). Hieraus ergeben sich prozesstechnische Vorteile, beispielsweise kann eine zu erwartende übermäßige lokale Koksbildung in beheizten und nach außen thermisch isolierten Durchtritten vermieden werden.

Da die zugrundeliegenden Reaktionen hohe Temperaturen erfordern, muss die elektrische Verbindung in dem zweiten Bereich in einem Hochtemperaturbereich von beispielsweise ca. 900 °C für das Steamcracken real isiert werden. Dies ist durch die erfindungsgemäß vorgeschlagenen Maßnahmen durch die Wahl geeigneter Materialien möglich. Die Verbindung soll gleichzeitig eine hohe elektrische Leitfähigkeit und eine hohe mechanische Stabilität und Zuverlässigkeit bei hohen Temperaturen aufweisen. Ein Versagen der elektrischen Verbindung unterbindet direkt den Potentialausgleich und führt in der Folge zur sofortigen sicherheitsbedingten Abschaltung der Anlage aufgrund einer unerwünschten Stromführung von Anlagenteilen. Die vorliegende Erfindung führt durch die Vermeidung derartiger Situationen zu Vorteilen gegenüber dem Stand der Technik.

Bei konventionell mit Brennern beheizten Reaktionsrohren zum Steamcracken besteht keine Notwendigkeit für eine Verbindung zwischen den im Reaktor angeordneten Umkehrbögen der Reaktionsrohre, die hier mit einer gewissen Bewegungsfreiheit aufgehängt werden. Insbesondere die unteren Umkehrbögen können frei im Reaktorbehälter hängen, während die oberen eine geringere, aber dennoch vorhandene, Bewegungsfreiheit aufweisen. Die Bewegungsfreiheit ist vorteilhaft für das mechanische Verhalten der Reaktionsrohre, das vor allem von der thermischen Dehnung der Rohre dominiert wird. Die vorliegende Erfindung beruht nun auf der Erkenntnis, dass eine starre Verbindung, die in dem erwähnten Kontext als negativ angesehen wird, Vorteile bietet, die die etwaigen Nachteile mangelnder Bewegungsfreiheit überwiegen.

Bei der Realisierung einer Sternschaltung von Reaktionsrohren gilt es, eine Konstruktion bereitzustellen, die eine ausreichend dimensionierte elektrisch leitende Querverbindung zwischen den Rohrstrecken bereitstellt und gleichzeitig den vor allem aus den hohen Wärmedehnungsraten resultierenden Spannungen standhält.

Die benötigte elektrische Verbindung zwischen den Umkehrbögen (Sternbrücke) kann nach dem Stand der Technik in diesem Temperaturbereich bisher nicht flexibel ausgeführt werden. Es gibt keine ausreichend Langzeit-temperaturstabilen oder ausreichend verarbeitbaren (z.B. schweißbaren) Materialien, aus denen sich flexible elektrische Verbindungen herstellen lassen. Zudem ist kaum anwendbare Verbindungstechnik für den Metall-Metall Übergang in diesem Anwendungsbereich verfügbar.

Die Erfindung beruht nun auf der überraschenden Erkenntnis, dass eine starre Sternbrückenverbindung, die eine für den benötigten elektrischen Potentialausgleich ausreichenden Querschnitt aufweist, trotz mangelnder Bewegungsfreiheit in der Lage ist, die im Hochtemperatureinsatz auftretenden mechanischen Spannungen über praxisrelevante Betriebszeiten aufzunehmen. Die hier fließenden Ströme liegen im Kiloamperebereich und erfordern daher einen beträchtlichen konstruktiven Aufwand.

Die vorliegende Erfindung wird nachfolgend zunächst unter Bezugnahme auf Reaktionsrohre und Reaktoren beschrieben, wie sie zum Steamcracken zum Einsatz kommen. Wie danach erläutert, kann die Erfindung aber auch in anderen Reaktortypen zum Einsatz kommen, wie sie danach angesprochen werden. Generell kann, wie erwähnt, der erfindungsgemäß vorgeschlagene Reaktor zur Durchführung aller endothermen chemischen Reaktionen verwendet werden.

In einer ersten Ausgestaltung der vorliegenden Erfindung kann der Reaktor insbesondere mit sogenannten 2-Passagen-Coils verwendet werden. Diese weisen zwei Rohrstrecken im Reaktorbehälter auf, die über (genau) einen Umkehrbogen ineinander übergehen und daher grundsätzlich die Form eines (verlängerten) U aufweisen. Die in den Reaktorbehälter ein- und aus diesem austretenden Abschnitte, die insbesondere nahtlos oder ohne strömungstechnisch relevanten Übergang in die beheizten Rohrstrecken übergehen, werden hier (auch in Bezug auf die nachfolgend beschriebenen Reaktionsrohre) als "Einspeiseabschnitt" und "Entnahmeabschnitt" bezeichnet. Es sind stets mehrere solcher Reaktionsrohre vorhanden.

Der Reaktor kann also in dieser Ausgestaltung derart ausgebildet sein, dass die Rohrstrecken jeweils zwei Rohrstrecken mehrerer Reaktionsrohre umfassen, die zumindest zum Teil nebeneinander in dem Reaktorbehälter angeordnet sind, wobei die jeweils zwei Rohrstrecken der mehreren Reaktionsrohre in dem ersten Bereich über jeweils einen Umkehrbogen ineinander übergehen. Insbesondere ist, wie erwähnt, eine der jeweils zwei Rohrstrecken in dem zweiten Bereich mit einem Einspeiseabschnitt und die anderen der jeweils zwei Rohrstrecken in dem zweiten Bereich mit einem Entnahmeabschnitt verbunden sind.

In der soeben erläuterten Ausgestaltung der vorliegenden Erfindung kann in einer Variante vorgesehen sein, dass jeweils die eine Rohrstrecke der jeweils zwei Rohrstrecken der mehreren Reaktionsrohre in dem zweiten Bereich mit einem ersten der Verbindungselemente und die andere Rohrstrecke der jeweils zwei Rohrstrecken der mehreren Reaktionsrohre in dem zweiten Bereich mit einem zweiten der Verbindungselemente verbunden ist. Auf diese Weise können mehrere, jeweils potentialfreie Sternpunkte ausgebildet werden, mit dem Vorteil, dass aufgrund einer erhöhten Flexibilität schmalerer, mehrerer Verbindungselemente geringere mechanische Spannungen, insb. aufgrund von thermischen Dehnungen, auftreten.

In der soeben erläuterten Ausgestaltung der vorliegenden Erfindung kann dagegen in einer anderen Variante vorgesehen sein, dass jeweils beide Rohrstrecken der mehreren Reaktionsrohre, und insbesondere alle Rohrstrecken in dem zweiten Bereich mit einem gemeinsamen Verbindungselement verbunden sind. Auf diese Weise wird insgesamt ein potentialfreier Sternpunkt ausgebildet, mit dem Vorteil, dass beispielsweise auf eine weitere Zwischenverbindung verzichtet werden kann.

Die soeben erläuterte Ausgestaltung der Erfindung kann auch auf Fälle übertragen werden, in denen Reaktionsrohre verwendet werden, die zwei Einspeiseabschnitte und einen Entnahmeabschnitt aufweisen. Bei solchen Reaktionsrohren sind die zwei Einspeiseabschnitte jeweils mit einem Rohrabschnitt verbunden. Der Entnahmeabschnitt ist ebenfalls mit einem Rohrabschnitt verbunden. Die mit den Einspeiseabschnitten verbundenen Rohrabschnitte gehen in einem typischerweise Y-förmigen Verbindungsbereich in den mit dem Entnahmeabschnitt verbundenen Rohrabschnitt über. Sowohl die mit den Einspeiseabschnitten verbundenen Rohrabschnitte als auch der mit dem Entnahmeabschnitt verbundene Umkehrbogen können jeweils keinen, einen oder mehrere Umkehrbögen aufweisen.

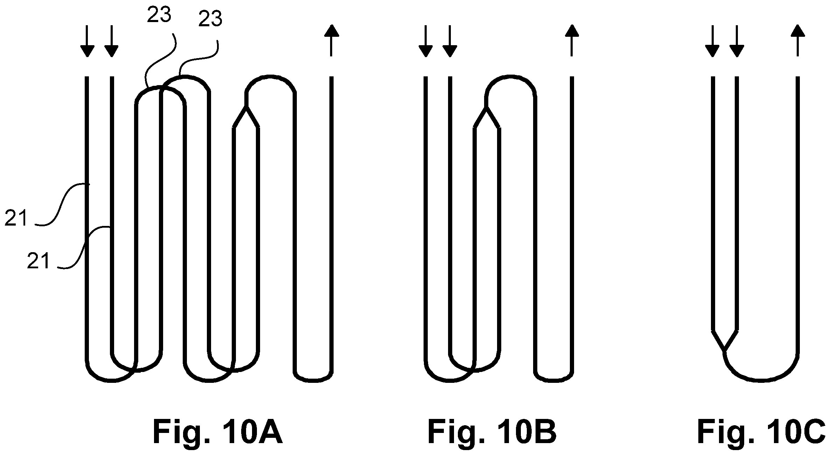

Beispielsweise können Reaktionsrohre verwendet werden, wie sie in Figur 10C veranschaulicht sind. Bei diesen weisen die mit den Einspeiseabschnitten verbundenen Rohrabschnitte keinen Umkehrbogen auf, wohingegen der mit dem Entnahmeabschnitt verbundene Rohrabschnitt einen Umkehrbogen aufweist.

Hierbei können insbesondere Rohrstrecken, die jeweils durch die mit den Einspeiseabschnitten verbundenen Rohrabschnitte gebildet sind, in dem zweiten Bereich mit einem ersten der Verbindungselemente und eine Rohrstrecke, die durch den mit dem Entnahmeabschnitt verbundenen Rohrabschnitt gebildet ist, mit einem zweiten der Verbindungselemente verbunden ist. Auf diese Weise können wie oben mehrere, jeweils potentialfreie Sternpunkte mit den ebenfalls bereits oben erläuterten Vorteilen ausgebildet werden.

Alternativ kann dagegen auch hier in einer anderen Variante vorgesehen sein, dass die Rohrstrecken, die jeweils durch die mit den Einspeiseabschnitten verbundenen Rohrabschnitte gebildet sind, und die Rohrstrecke, die durch den mit dem Entnahmeabschnitt verbundenen Rohrabschnitt gebildet ist, und insbesondere alle Rohrstrecken in dem zweiten Bereich, mit einem gemeinsamen Verbindungselement verbunden sind. Auf diese Weise wird auch hier insgesamt ein potentialfreier Sternpunkt ausgebildet, mit dem Vorteil, dass beispielsweise auf eine weitere Zwischenverbindung verzichtet werden kann.

Es können jedoch auch Reaktionsrohre verwendet werden, wie sie in Figur 10B veranschaulicht sind. Bei diesen weisen die mit den Einspeiseabschnitten verbundenen Rohrabschnitte jeweils einen Umkehrbogen auf und der mit dem Entnahmeabschnitt verbundene Rohrabschnitt weist zwei Umkehrbögen auf.

Auch die Verwendung von Reaktionsrohren, wie sie in Figur 10A veranschaulicht sind. ist möglich. Bei diesen weisen die mit den Einspeiseabschnitten verbundenen Rohrabschnitte jeweils drei Umkehrbögen auf und der mit dem Entnahmeabschnitt verbundene Rohrabschnitt weist zwei Umkehrbögen auf.

Auch in den letzten beiden Fällen können beliebige der Rohrstrecken in dem zweiten Bereich mit unterschiedlichen Verbindungselementen oder mit einem gemeinsamen Verbindungselement verbunden sein, wodurch sich ebenfalls die bereits oben erläuterten Vorteilen erzielen lassen. Auch eine Vielzahl weiterer Konfigurationen mit verzweigten bzw. Y-förmig zusammengefassten Reaktionsrohren ist möglich.

Alternativ kann dagegen auch hier in einer anderen Variante vorgesehen sein, dass die Rohrstrecken, die jeweils durch die mit den Einspeiseabschnitten verbundenen Rohrabschnitte gebildet sind, und die Rohrstrecke, die durch den mit dem Entnahmeabschnitt verbundenen Rohrabschnitt gebildet ist, und insbesondere alle Rohrstrecken in dem zweiten Bereich, mit einem gemeinsamen Verbindungselement verbunden sind. Auf diese Weise wird auch hier insgesamt ein potentialfreier Sternpunkt ausgebildet, mit dem Vorteil, dass beispielsweise auf eine weitere Zwischenverbindung verzichtet werden kann.

Neben der zuvor insbesondere unter Bezugnahme auf 2-Passagen-Coils beschriebenen Ausgestaltung kann aber auch eine Ausgestaltung zum Einsatz kommen, die sich zur Verwendung mit sogenannten 4-Passagen-Coils eignet. Diese weisen vier im Wesentlichen gerade verlaufende Rohrstrecken auf. Auch Anordnungen mit einer höheren, geraden Anzahl an gerade verlaufenden Rohrstrecken ist jedoch möglich.

Ein entsprechend ausgebildeter Reaktor weist dabei allgemeiner betrachtet ein oder mehrere Reaktionsrohre auf, das oder die jeweils eine gerade Anzahl von vier oder mehr seriell miteinander über eine Anzahl von Umkehrbögen verbundenen Rohrstrecken aufweist oder aufweisen, wobei die Anzahl der Umkehrbögen um eins geringer ist als die Anzahl der seriell miteinander über die Umkehrbögen verbundenen Rohrstrecken, und wobei die Umkehrbögen, anfangend mit einem ersten Umkehrbogen in dem ersten Bereich, abwechselnd in dem ersten und dem zweiten Bereich angeordnet sind.

Unter einem "Umkehrbogen" wird hier insbesondere ein Rohrabschnitt oder Rohrbauteil verstanden, der oder das einen teilkreis- oder teilelliptischen, insbesondere halbkreis- oder halbelliptischen Rohrbogen umfasst. Beginn und Ende weisen insbesondere in einer Ebene nebeneinander liegende Schnittflächen auf.

In einem ersten Beispiel, bei dem ein 4-Passagen-Coil zum Einsatz kommt, umfassen die erwähnten Rohrstrecken eine erste, eine zweite, eine dritte und eine vierte Rohrstrecke eines Reaktionsrohrs oder jeweils eines Reaktionsrohrs mehrerer Reaktionsrohre, wobei die erste Rohrstrecke über einen ersten Umkehrbogen in die zweite Rohrstrecke, die zweite Rohrstrecke über einen zweiten Umkehrbogen in die dritte Rohrstrecke und die dritte Rohrstrecke über einen dritten Umkehrbogen in die vierte Rohrstrecke übergeht. Die erste Rohrstrecke ist insbesondere in dem zweiten Bereich mit einem Einspeiseabschnitt verbunden und die vierte Rohrstrecke ist insbesondere in dem zweiten Bereich mit einem Entnahmeabschnitt verbunden. Der erste und dritte gekrümmte Abschnitt sind in dem ersten Bereich und der zweite gekrümmte Abschnitt ist in dem zweiten Bereich angeordnet. Diese Erläuterungen gelten entsprechend auch für sechs Rohrstrecken, wobei dann ein erster, dritter und fünfter gekrümmter Abschnitt in dem ersten Bereich und ein zweiter und vierter gekrümmter Abschnitt in dem zweiten Bereich angeordnet sind.

In den soeben erläuterten Ausgestaltungen mit einem oder mehreren Umkehrbögen können die in dem zweiten Bereich angeordneten Umkehrbögen in dem Verbindungselement ausgebildet sein und die Rohrstrecken können sich ausgehend von dem Verbindungselement in dem ersten Bereich zu dem zweiten Bereich erstrecken.

Das Verbindungselement kann dabei an die zuvor mit dem oder den Umkehrbögen in dem zweiten Bereich zusammengefügten (beispielsweise mit diesen verschweißten) oder mit diesem oder diesen (beispielsweise durch Biegen) verbunden ausgebildeten Rohrabschnitte angegossen sein. Mit anderen Worten kann hier also ein Reaktionsrohr vorab mit entsprechenden Rohrstrecken und einem oder mehreren Umkehrbögen ausgebildet und dann in entsprechenden Bereichen umgossen werden. Auf diese Weise ergibt sich eine einfachere Ausbildung der Reaktionsrohre.

Alternativ ist es aber auch möglich, den oder die Umkehrbögen in dem zweiten Bereich in dem Verbindungselement auszubilden (beispielsweise zu gießen) und die Rohrabschnitte an das Verbindungselement anzuschweißen. Auf diese Weise kann ein entsprechender Reaktor vereinfacht modular erstellt werden, und es müssen lediglich noch die geraden Rohrstrecken angeschweißt werden. Durch die Verwendung des Verbindungselements als Gleichteil resultieren geringere Erstellungskosten.

Nochmals zusammengefasst kann ein entsprechender Reaktor beliebige aus dem Stand der Technik bekannte Reaktionsrohre aufweisen, wie sie insbesondere auch in dem eingangs erwähnten Artikel "Ethylene" in Ullmann's Encyclopedia of Industrial Chemistry beschrieben sind. Entsprechende Reaktionsrohre werden beispielsweise mit SC-1, SC-2, SC-4, USC-U, Super U, USC-W, FFS, GK-1, GK-6, SMK, Pyrocrack 1-1, Pyrocrack 2-2 oder Pyrocrack 4-2 bezeichnet.

Wie erwähnt, kann ein entsprechender Reaktor insbesondere als Reaktor zum Steamcracken ausgebildet sein, und zwar insbesondere durch die Wahl entsprechen temperaturfester Materialien und die geometrische Ausgestaltung der Reaktionsrohre.

In einer weiteren Alternative können die Rohrstrecken aber jeweils eine Rohrstrecke von mehreren Reaktionsrohren umfassen, wobei die Rohrstrecken innerhalb des Reaktorbehälters fluidisch unverbunden und zumindest zum Teil nebeneinander angeordnet sind und jeweils mit einem Einspeiseabschnitt (für Fluid) in dem ersten Bereich und einem Entnahmeabschnitt (für Fluid) in dem zweiten Bereich. verbunden sind. Letztere erstrecken sich insbesondere in derselben Richtung wie die Rohrstrecken bzw. bewirken keine um mehr als 15°ge genüber der Fluidströmung in den damit verbundenen Rohrstrecken abgelenkte Fluidströmung. Die Einspeiseabschnitte und Entnahmeabschnitte sind insbesondere ebenfalls einstückig, d.h. insbesondere in Form desselben Rohrs, mit diesen ausgebildet. Die Reaktionsrohre sind hier insbesondere ohne Umkehrbögen ausgebildet. Auf diese Weise wird ein Reaktor geschaffen, wie er sich beispielsweise insbesondere zur Durchführung einer Dampfreformierung eignet. Dies kann insbesondere auch durch die Ausstattung der Reaktionsrohre mit einem geeigneten Katalysator erfolgen.

In dieser Ausgestaltung ist das Verbindungselement in dem zweiten Bereich insbesondere an die Reaktionsrohre angegossen. Es kann dabei insbesondere die Reaktionsrohre manschettenartig umgeben.

In sämtlichen zuvor erläuterten Fällen können das Verbindungselement und die Rohrstrecken aus demselben Material oder aus Materialien ausgebildet sein, deren elektrische Leitfähigkeiten (im Sinne einer Materialkonstante, wie in der Fachwelt üblich) sich um nicht mehr als 50%, nicht mehr als 30%, nicht mehr als 10% voneinander unterscheiden oder vorteilhafterweise gleich sind. Beispielsweise können das Verbindungselement und die Rohrstrecken auch aus Stählen derselben Stahlklasse ausgebildet sein. Die Verwendung gleicher oder nahe verwandter Materialien kann dabei die einstückige Ausbildung des Verbindungselements und der Rohrstrecken, beispielsweise durch Angießen oder Verschweißen, erleichtern.

In allen Fällen kann durch die Ausbildung des Verbindungselements aus so wenigen Einzelteilen wie möglich die Anzahl der Metall-Metall-Verbindungen (z.B. Schweiß- oder Lötverbindungen) reduziert oder sogar komplett auf diese verzichtet werden. Dadurch können die mechanische Stabilität sowie die Zuverlässigkeit erhöht werden. In einer weiteren Ausführung kann das Verbindungselement als ein einziges Gussteil umgesetzt werden, oder es können, wie erwähnt, Teile der prozessführenden Rohrleitungen in das Verbindungselement eingegossen werden und/oder Teile der prozessführenden Rohrleitungen können als ein integraler Bestandteil eines entsprechenden Gussstücks ausgebildet sein.

Metall-Metall-Verbindungen oder Metallübergänge, die im Rahmen der vorliegenden Erfindung reduziert werden können, könnten zu einer lokalen elektrischen Widerstandsänderung, und deswegen zu Hot Spots führen. Hot Spots wiederum führen zu einer Reduzierung der Lebenszeit durch erhöhte lokale Temperaturen oder zu mechanischen Spannungsspitzen durch hohe lokale Temperaturgradienten. Dies wird im Rahmen der vorliegenden Erfindung vermieden.

Ein einteilig ausgebildetes Verbindungselement bringt mechanische Stabilität, Zuverlässigkeit und eine Reduktion der Einzelbauteile. Eine hohe mechanische Stabilität der Sternbrücke ist erstrebenswert, da ein Versagen der Sternbrücke wie erwähnt zu sicherheitskritischen Situationen führt. Durch die beschriebene Ausführung im Sinne der vorliegenden Erfindung kann das Prinzip der mit mehrphasigem Wechselstrom widerstandbeheizten Reaktionsrohre in Sternschaltung technisch im Hochtemperaturbereich, d.h. insbesondere bei mehr als 500 °C, mehr als 600 °C, mehr als 700 °C oder mehr als 800 °C, realisiert werden.

Eine erwünschter erhöhter Leitwert des Verbindungselements kann bei gleichen Leitfähigkeiten durch eine Erhöhung der Querschnittsfläche gemäß R = ρ (l/A), mit R dem Widerstand des Leiters in Ohm, ρ dem spezifischen elektrischen Widerstand, also dem Kehrwert der Leitfähigkeit, I der Länge des Leiters und A dessen Querschnittsfläche erzielt werden.

Mögliche Materialien für die Reaktionsrohre und daher auch für das Verbindungselement sind z.B. hochlegierte Chromnickelstähle, wie sie auch in befeuerten Öfen verwendet werden. Vorteilhafterweise handelt es sich dabei um Legierungen mit hoher Oxidations- bzw. Zunderbeständigkeit und hoher Aufkohlungsbeständigkeit.

Beispielsweise kann es sich um eine Legierung mit mit 0,1 bis 0,5 Gew.-% Kohlenstoff, 20 bis 50 Gew.-% Chrom, 20 bis 80 Gew.-% Nickel, 0 bis 2 Gew.-% Niob, 0 bis 3 Gew.-% Silicium, 0 bis 5 % Wolfram und 0 bis 1 Gew.-% anderer Komponenten handeln, wobei die Gehalte sich jeweils zu dem Nichteisenanteil ergänzen. Eine entsprechende Legierung kann beispielsweise auch 20 bis 40 Gew.-% Chrom, 20 bis 50 Gew.-% Nickel, 0 bis 10 Gew.-% Silicium, 0 bis 10 Gew.-% Aluminium und 0 bis 4 Gew.-% Niob enthalten.

Beispielsweise können Materialien mit den Normbezeichnungen GX40CrNiSi25-20, GX40NiCrSiNb35-25, GX45NiCrSiNbTi35-25, GX35CrNiSiNb24-24, GX45NiCrSi35-25, GX43NiCrWSi35-25-4, GX10NiCrNb32-20, GX50CrNiSi30-30, G-NiCr28W, G-NiCrCoW, GX45NiCrSiNb45-35, GX13NiCrNb45-35, GX13NiCrNb37-25, oder GX55NiCrWZr33-30-04 gemäß DIN EN 10027, Teil 1, "Werkstoffe", verwendet werden. Diese haben sich für den Hochtemperatureinsatz als besonders geeignet erwiesen.

In einer weiteren Ausführung kann das Verbindungselement thermisch gegenüber der heißen Umgebung isoliert werden, um thermische Spannung infolge hoher Temperaturgradienten zu reduzieren. Beispielsweise kann ein innerhalb des Reaktorbehälters angeordneter Strahlungsschutzschirm bereitgestellt werden, der den Bereich des Verbindungselements vor einem übermäßigen Wärmeeintrag aus dem Bereich der Rohrstrecken abschirmt.

In einer weiteren Ausführung kann ein Teil des Verbindungselements aus dem Material der Reaktionsrohre bestehen und ein Teil (bzw. weitere Teile) des Verbindungselements kann aus einem Material mit einer höheren spezifischen elektrischen Leitfähigkeit bestehen. Dabei ist nicht zwingend eine feste Metall-Metall-Verbindung (z.B. Schweißnaht) vorgesehen. Der elektrische Kontakt kann auch durch unterschiedliche thermische Ausdehnung sichergestellt werden. Beispielweise könnte ein Gussteil aus einem der zuvor angegebenen Materialien in ein passendes Molybdän-U-Profil eingesetzt werden.

In dieser Ausgestaltung ist also, im Sprachgebrauch der Ansprüche, das Verbindungselement zumindest zum Teil von einem Leitelement aus einem Material, das reich an Molybdän, Wolfram, Tantal, Niob und/oder Chrom oder hieraus gebildet ist, umgeben. Das Material weist insbesondere eine höhere spezifische elektrische Leitfähigkeit als das Material auf, aus dem das Verbindungselement gebildet ist. Dadurch kann der Potentialausgleich im Sternpunkt deutlich verbessert werden bzw. ein entsprechendes Verbindungselement entsprechend leichter gebaut werden.

Die Erfindung betrifft auch ein Verfahren zur Durchführung einer chemischen Reaktion unter Verwendung eines Reaktors, der einen Reaktorbehälter und ein oder mehrere Reaktionsrohre aufweist, wobei eine Anzahl von Rohrstrecken des einen oder der mehreren Reaktionsrohre jeweils zwischen einem ersten Bereich und einem zweiten Bereich in dem Reaktorbehälter verlaufen, und wobei die ersten Bereiche zur Beheizung der Rohrstrecken jeweils elektrisch mit den Phasenanschlüssen einer mehrphasigen Wechselstromquelle verbunden werden.

Erfindungsgemäß wird dabei ein Reaktor verwendet, bei dem die Rohrstrecken in den zweiten Bereichen mittels eines Verbindungselements, das einstückig mit dem einen oder den mehreren Reaktionsrohren verbunden und innerhalb des Reaktorbehälters angeordnet ist, elektrisch leitend miteinander verbunden sind.

Zu weiteren Merkmalen und Vorteilen eines entsprechenden Verfahrens, bei dem vorteilhafterweise ein Reaktor gemäß einer der zuvor erläuterten Ausgestaltungen der Erfindung verwendet wird, sei auf die obigen Erläuterungen verwiesen.

Die Erfindung wird nachfolgend unter Bezugnahme auf die beigefügten Zeichnungen weiter erläutert, die Ausgestaltungen der vorliegenden Erfindung unter Bezugnahme und im Vergleich zum Stand der Technik veranschaulichen.

### Figurenbeschreibung

Figur 1 veranschaulicht schematisch einen Reaktor zur Durchführung einer chemischen Reaktion gemäß einer nicht erfindungsgemäßen Ausgestaltung.
Figur 2 veranschaulicht schematisch einen Reaktor zur Durchführung einer chemischen Reaktion gemäß einer Ausgestaltung der Erfindung.
Figur 3 veranschaulicht schematisch einen Reaktor zur Durchführung einer chemischen Reaktion gemäß einer weiteren Ausgestaltung der Erfindung.
Figur 4 veranschaulicht schematisch ein Verbindungselement zur Verwendung in einem Reaktor gemäß einer Ausgestaltung der Erfindung.
Figur 5 veranschaulicht schematisch ein Verbindungselement zur Verwendung in einem Reaktor gemäß einer Ausgestaltung der Erfindung.
Figur 6 veranschaulicht schematisch ein Verbindungselement zur Verwendung in einem Reaktor gemäß einer Ausgestaltung der Erfindung im Querschnitt.
Figur 7 veranschaulicht Widerstände einer Anordnung zur Verwendung in einem Reaktor gemäß einer Ausgestaltung der Erfindung.

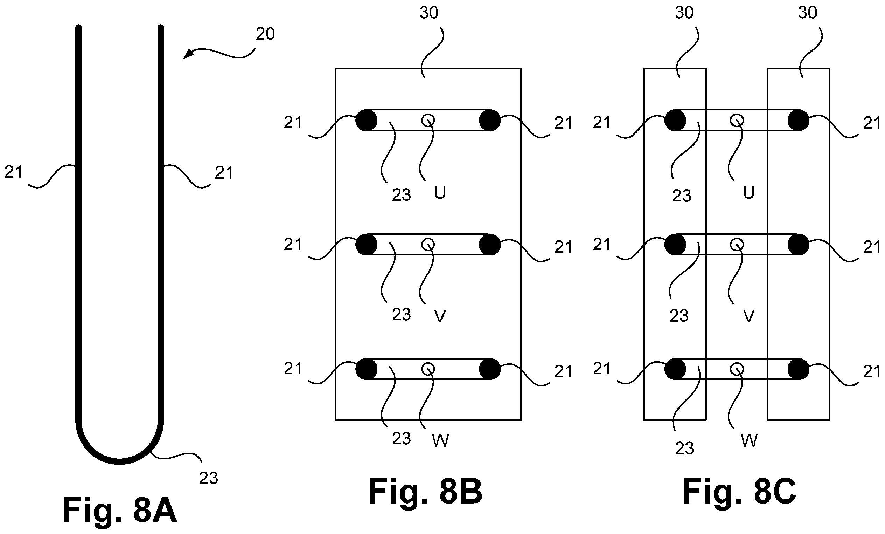

Figuren 8A bis 8C veranschaulichen Reaktionsrohre und entsprechende Anordnungen zur Verwendung in einem Reaktor gemäß einer Ausgestaltung der Erfindung.
Figuren 9A und 9B veranschaulichen Reaktionsrohre und entsprechende Anordnungen zur Verwendung in einem Reaktor gemäß einer Ausgestaltung der Erfindung.
Figuren 10A bis 10C veranschaulichen weitere Reaktionsrohre zur Verwendung in einem Reaktor gemäß einer Ausgestaltung der Erfindung.

In den Figuren sind einander baulich oder funktionell entsprechende Elemente mit identischen Bezugszeichen veranschaulicht und werden der Übersichtlichkeit halber nicht wiederholt erläutert. Werden nachfolgend Komponenten von Vorrichtungen erläutert, betreffen die entsprechenden Erläuterungen jeweils auch die damit durchgeführten Verfahren und umgekehrt.

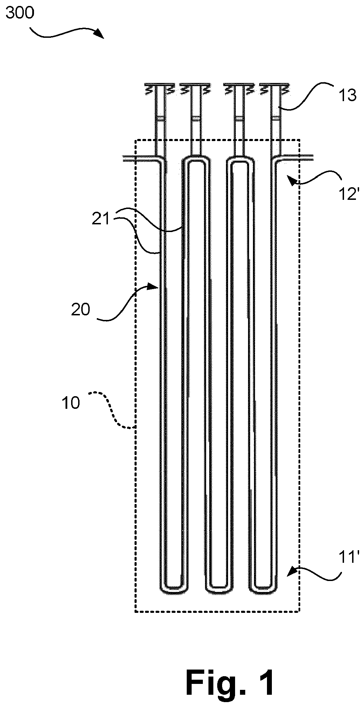

Figur 1 veranschaulicht schematisch einen Reaktor zur Durchführung einer chemischen Reaktion gemäß einer nicht erfindungsgemäßen Ausgestaltung.

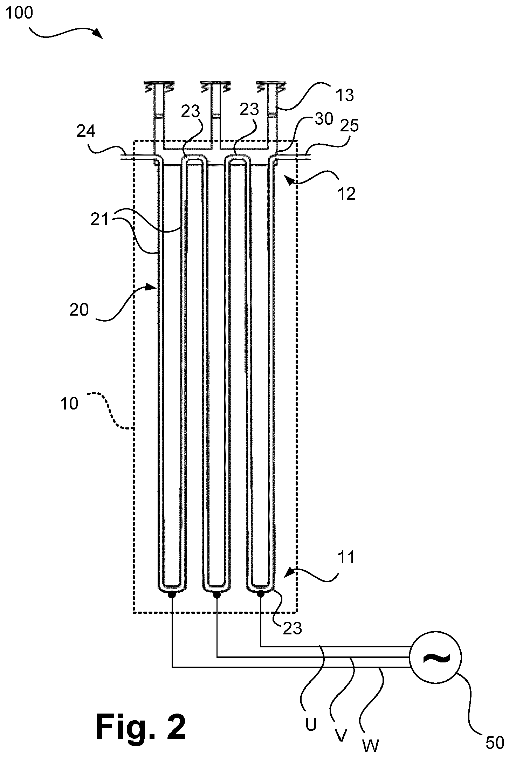

Der hier mit 300 bezeichnete Reaktor ist zur Durchführung einer chemischen Reaktion eingerichtet. Er weist dazu einen insbesondere thermisch isolierten Reaktorbehälter 10 und ein Reaktionsrohr 20 auf, wobei eine Anzahl von Rohrstrecken des Reaktionsrohrs 20, die hier nur in zwei Fällen mit 21 bezeichnet sind, jeweils zwischen einer ersten Zone 11' und einer zweiten Zone 12' in dem Reaktorbehälter 10 verlaufen. An einer Decke des Reaktorbehälters bzw. an einer Stützstruktur ist das Reaktionsrohr 20, das nachfolgend noch in Bezug auf Figur 2 näher erläutert wird, mit geeigneten Aufhängungen 13 befestigt. In einem unteren Bereich kann der Reaktorbehälter insbesondere eine nicht veranschaulichte Feuerung aufweisen. Es versteht sich, dass hier und nachfolgend jeweils mehrere Reaktionsrohre bereitgestellt sein können.

Figur 2 veranschaulicht schematisch einen Reaktor zur Durchführung einer chemischen Reaktion gemäß Ausgestaltung der vorliegenden Erfindung, der insgesamt mit 100 bezeichnet ist.

Die zuvor mit 11' und 12' bezeichneten Zonen sind hier als Bereiche 11 und 12 ausgebildet, wobei die Rohrstrecken 21 zur Beheizung der Rohrstrecken 21 in den ersten Bereichen 11 jeweils elektrisch mit den Phasenanschlüssen U, V, W einer mehrphasigen Wechselstromquelle 50 verbindbar sind. Entsprechende Phasenanschlüsse können fachüblich auch mit L1, L2, L3 oder A, B, C sowie anderen Abkürzungen bezeichnet werden. Schalter und dergleichen sowie die spezifische Art der Anbindung sind nicht veranschaulicht.

Die Rohrstrecken 21 sind in der hier veranschaulichten Ausgestaltung der Erfindung in den zweiten Bereichen 12 mittels eines Verbindungselements 30, das einstückig mit dem einen oder den mehreren Reaktionsrohren 20 verbunden und innerhalb des Reaktorbehälters 10 angeordnet ist, elektrisch leitend miteinander verbunden. Daran kann auch ein Neutralleiter angebunden sein.

In dem hier veranschaulichten Reaktor 100 sind damit mehrere Rohrstrecken 21 eines Reaktionsrohrs 20 (wenngleich mehrere solcher Reaktionsrohre 20 bereitgestellt sein können), die nebeneinander in dem Reaktorbehälter 10 angeordnet sind. Die Rohrstrecken 21 gehen über Umkehrbögen 23 (nur teilweise bezeichnet) ineinander über und sind mit einem Einspeiseabschnitt 24 und einem Entnahmeabschnitt 25 verbunden.

Eine erste Gruppe der Umkehrbögen 23 (in der Zeichnung unten) ist nebeneinander in dem ersten Bereich 11 und eine zweite Gruppe der Umkehrbögen 23 (in der Zeichnung oben) ist nebeneinander in dem zweiten Bereich 12 angeordnet. Die Umkehrbögen 23 der zweiten Gruppe sind in dem Verbindungselement 30 ausgebildet und die Rohrstrecken 21 erstrecken sich ausgehend von dem Verbindungselement 30 in dem zweiten Bereich 12 zu dem ersten Bereich 11.

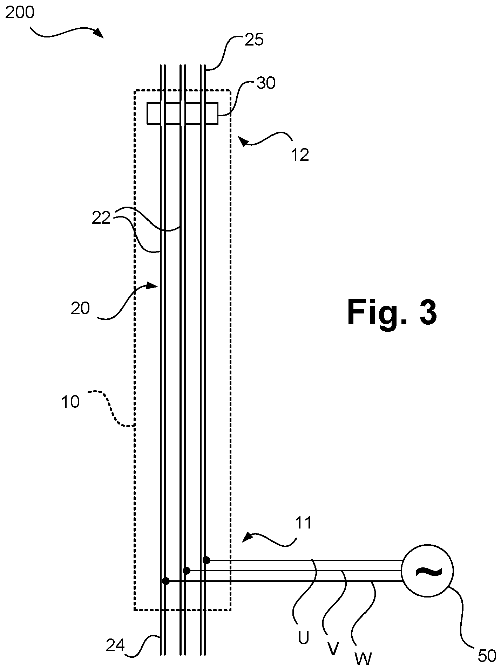

Figur 3 veranschaulicht schematisch einen Reaktor zur Durchführung einer chemischen Reaktion gemäß Ausgestaltung der vorliegenden Erfindung, der insgesamt mit 200 bezeichnet ist.

In dem Reaktor 200 umfassen die hier abweichend mit 22 bezeichneten Rohrstrecken jeweils eine Rohrstrecke 22 von mehreren Reaktionsrohren 20, wobei die Rohrstrecken fluidisch 22 unverbunden nebeneinander in dem Reaktorbehälter 10 angeordnet sind und jeweils mit Einspeiseabschnitten 24 und Entnahmeabschnitten 25 verbunden sind. Zu den übrigen Elementen sei auf die obigen Erläuterungen zu den voranstehenden Figuren ausdrücklich verwiesen.

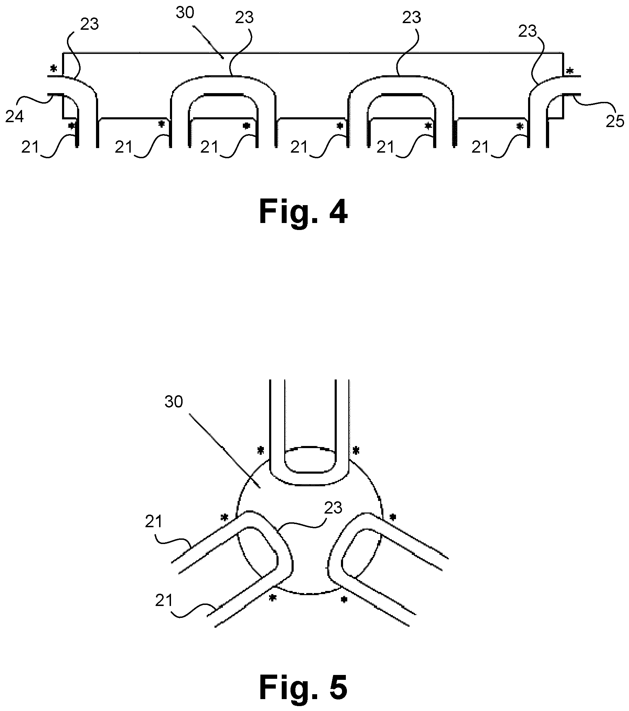

Figur 4 veranschaulicht schematisch ein Verbindungselement 30 zur Verwendung in einem Reaktor gemäß einer Ausgestaltung der Erfindung, beispielsweise in dem Reaktor 100 gemäß Figur 2.

Da die in Figur veranschaulichten Elemente im Wesentlichen bereits zuvor erläutert wurden, wird auf die obigen Ausführungen, insbesondere zu den Figuren 1 und 2, ausdrücklich verwiesen. Nicht dargestellt sind hier die Aufhängungen 13, zusätzlich veranschaulicht sind in Form von Sternsymbolen Schweißstellen, an denen in der hier veranschaulichten Ausgestaltung die Rohrstrecken 21 and die in dem Verbindungselement 30 beispielsweise beim Guss ausgebildeten, Umkehrbögen 23 angeschweißt sind.

Figur 5 veranschaulicht schematisch ein Verbindungselement 30 zur Verwendung in einem Reaktor gemäß einer Ausgestaltung der Erfindung, wie sie zuvor noch nicht veranschaulicht wurde.

Wie hier dargestellt, kann im Rahmen der vorliegenden Erfindung auch eine im geometrischen Sinn sternförmige Anordnung der Rohrstrecken 21 vorgenommen werden, wobei das Verbindungselement 30 im Zentrum dieser Anordnung steht. Es versteht sich, dass mehrere solche sternförmige Anordnungen auch beispielsweise nebeneinander oder übereinander gestapelt vorgesehen sein können. Abweichend zu der Anordnung, wie sie in Figur 5 veranschaulicht ist, können sich die Rohrstrecken auch beispielsweise aus der Papierebene nach oben oder unten erstrecken.

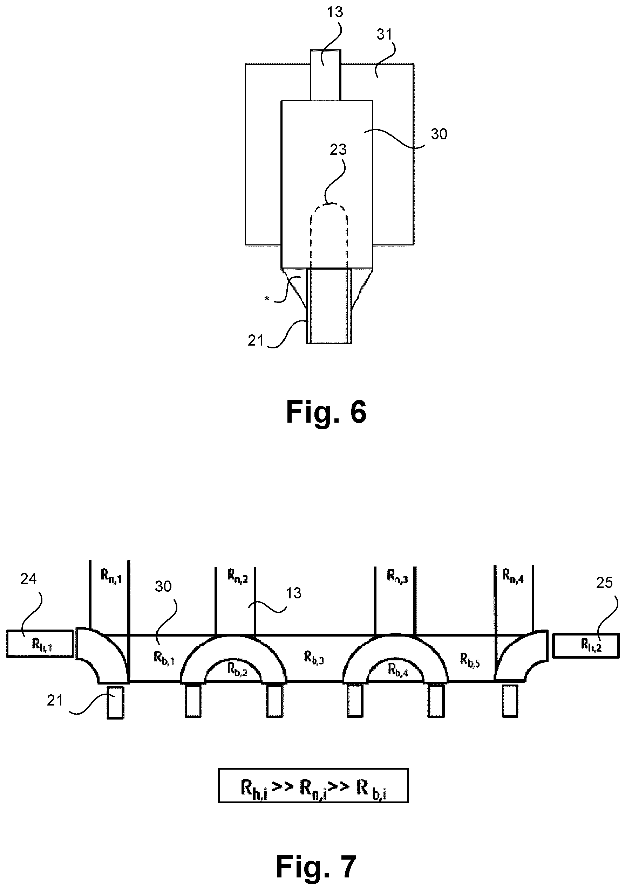

Figur 6 veranschaulicht schematisch ein Verbindungselement 30 zur Verwendung in einem Reaktor gemäß einer Ausgestaltung der Erfindung, wiederum beispielsweise dem Reaktor 100 gemäß Figur 2, im Querschnitt.

Wie hier veranschaulicht, ist das Verbindungselement 30 zumindest zum Teil von einem Leitelement 31 aus einem zuvor erläuterten Material mit geeigneter Leitfähigkeit umgeben, das beispielsweise in Form eines U-Profils ausgebildet ist. Das Verbindungselement 30 kann beispielsweise aus einem hochlegierten Chrom-Nickel-Stahl, beispielsweise aus dem erwähnten ET45-Micro-Material, ausgebildet sein. Durch das Leitelement 31 wird der Potentialausgleich verbessert, wie bereits erläutert.

Figur 7 veranschaulicht Widerstände in einer Anordnung zur Verwendung in einem Reaktor gemäß einer Ausgestaltung der Erfindung bzw. hier vorteilhafterweise zu erreichende Widerstandsbeziehungen der Elemente zueinander. Die Anordnung eignet sich insbesondere zur Verwendung in einem Reaktor 100 gemäß Figur 2.

Widerstände in dem Verbindungselement 30 sind in Figur 7 mit Rb,i, in dem Einspeise- und Entnahmeabschnitten 24 und 25 mit Rh,i, und in den Aufhängungen 13 mit Rn,i angegeben. Wie auch in der Figur 7 selbst dargestellt, sollte dabei vorteilhafterweise Rh,i >> Rn,i >> Rb,i gelten.

Bei Crackeröfen werden können neben den zuvor in den Figuren 1 und 2 gezeigten Reaktionsrohren 20, die üblicherweise als 6-Passagen-Coils bezeichnet werden, und die sechs gerade Rohrstrecken 21 mit zwei 180°-Krüm mern, d.h. Umkehrbögen 23, oben bzw. in dem zweiten Bereich 12 und drei 180°-K rümmern, d.h. Umkehrbögen 23, unten bzw. in dem ersten Bereich 11 aufweisen, auch Varianten mit weniger Passagen verwendet werden. Zum Beispiel weisen sogenannte 2-Passagen-Coils nur zwei gerade Rohrstrecken 21 und nur einen 180°-Krümmer bzw. Umkehrbogen 23 auf. Übertragen auf eine elektrische Beheizung kann diese Variante als eine Kombination von 6-Passagen-Crackerofen (Figuren 1 und 2) und Reformerofen (Figur 3, mit Reaktionsrohren ohne Umkehrbögen 23) angesehen werden:
Die Stromeinspeisung kann an einer Stelle pro Reaktionsrohr 21 am unteren (bzw. einzigen) Umkehrbogen stattfinden. Jeweils M Reaktionsrohre können elektrisch miteinander gekoppelt sein, mit einer Phasenverschiebung um 360°/M und mit einem gemeinsamen Verbindungselement 30. Dabei kann in einer ersten Alternative pro Coil-Paket bzw. für alle jeweils betrachteten Reaktionsrohre 20 ein besonders großes Verbindungselement 30 verwendet werden. In einer zweiten Alternative ist aber auch der Einsatz von zwei kleiner dimensionierten Verbindungselementen 30 möglich.

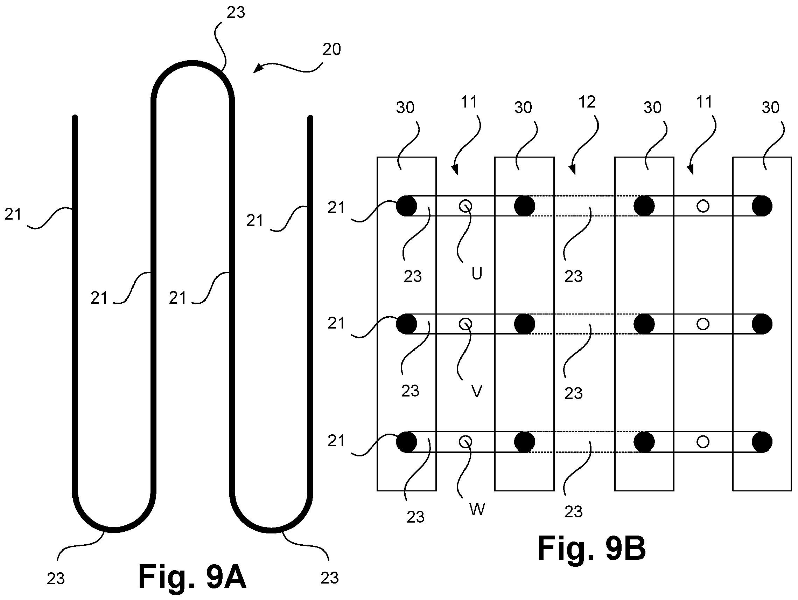

Die soeben erläuterte erste Alternative ist in Figur 9B, die soeben erläuterte zweite Alternative in Figur 9C in einer Querschnittsansicht durch die Rohrstrecken 21 veranschaulicht, wobei ein entsprechendes Reaktionsrohr 20 in einer Ansicht senkrecht zu den Ansichten der Figuren 9B und 9C in Figur 9A dargestellt ist. Zur Bezeichnung der entsprechenden Elemente sei auf die Figur 1 verwiesen. Es versteht sich, dass das oder die Verbindungselemente 30 mit den dort ggf. angeordneten Umkehrbögen 23 einerseits und die anderen Umkehrbögen 23 andererseits mit den Anschlüssen an die Phasen U, V, W in unterschiedlichen Ebenen, entsprechend dem ersten und dem zweiten Bereich 11, 12 eines Reaktors, angeordnet sind.

Entsprechend kann dieses Konzept auch auf Coils bzw. Reaktionsrohre 20 mit vier Passagen bzw. Rohrstrecken 21 (sogenannte 4-Passagen-Coils) angewandt werden, in diesem Fall mit einer, zwei oder vier Sternbrücken bzw. Verbindungselementen 30. Ein entsprechendes Beispiel ist in den Figuren 9A und 9B dargestellt, wobei in Figur 9B vier Verbindungselemente dargestellt sind. Zur besseren Veranschaulichung sind die Umkehrbögen 23 hier gestrichelt (Umkehrbögen in dem zweiten Bereich 12 des Reaktors) und ungestrichelt (Umkehrbögen in dem ersten Bereich 11) dargestellt. Die Elemente sind der Übersichtlichkeit halber nur teilweise mit Bezugszeichen versehen.

Auf die Figuren 10A und 10B, die weitere Reaktionsrohre zur Verwendung in einem Reaktor gemäß einer Ausgestaltung der Erfindung veranschaulichen, wurde bereits zuvor Bezug genommen. Die Reaktionsrohre und Rohrabschnitte sind hier nur jeweils teilweise mit Bezugszeichen versehen. Einspeise- und Entnahmeabschnitte ergeben sich durch die dargestellten Flusspfeile.

## Patentansprüche

1. Reaktor (100, 200) zur Durchführung einer chemischen Reaktion, der einen Reaktorbehälter (10) und ein oder mehrere Reaktionsrohre (20) aufweist, wobei eine Anzahl von Rohrstrecken (21, 22) des einen oder der mehreren Reaktionsrohre (20) jeweils zwischen einem ersten Bereich (11) und einem zweiten Bereich (12) in dem Reaktorbehälter (10) verlaufen, und wobei die Rohrstrecken (21, 22) in dem ersten Bereich (11) zur elektrischen Beheizung der Rohrstrecken (21, 22) jeweils elektrisch mit den Phasenanschlüssen einer mehrphasigen Wechselstromquelle (50) verbunden oder verbindbar sind, **dadurch gekennzeichnet, dass** die Rohrstrecken (21, 22) in dem zweiten Bereich (12) insgesamt mittels eines einzigen starren Verbindungselements (30) oder gruppenweise mittels mehrerer starrer Verbindungselemente (30), das oder die einstückig mit dem einen oder den mehreren Reaktionsrohren (20) verbunden und innerhalb des Reaktorbehälters (10) angeordnet ist oder sind, elektrisch leitend miteinander verbunden sind.

2. Reaktor (100, 200) nach Anspruch 1, bei dem die chemische Reaktion eine endotherme chemische Reaktion ist.

3. Reaktor nach Anspruch 1 oder 2, bei dem die Rohrstrecken (21) jeweils zwei Rohrstrecken (21) mehrerer Reaktionsrohre (20) umfassen, die zumindest zum Teil nebeneinander in dem Reaktorbehälter (10) angeordnet sind, wobei die jeweils zwei Rohrstrecken (21) der mehreren Reaktionsrohre (20) in dem ersten Bereich (11) über jeweils einen Umkehrbogen (23) ineinander übergehen.

4. Reaktor nach Anspruch 3, bei dem jeweils die eine Rohrstrecke (21) der jeweils zwei Rohrstrecken (21) der mehreren Reaktionsrohre (20) mit einem ersten der mehreren Verbindungselemente (30) und die andere Rohrstrecke (21) der jeweils zwei Rohrstrecken (21) der mehreren Reaktionsrohre (20) mit einem zweiten der mehreren Verbindungselemente (30) verbunden ist.

5. Reaktor nach Anspruch 3, bei dem jeweils beide Rohrstrecken (21) der mehreren Reaktionsrohre (20) mit dem einen Verbindungselement (30) verbunden sind.

6. Reaktor (100) nach Anspruch 1 oder 2 bei dem die Rohrstrecken (21) eine gerade Anzahl von vier oder mehr Rohrstrecken (21) eines Reaktionsrohrs (20) oder jeweils eines vorn mehreren Reaktionsrohren (20) sind, die seriell miteinander über eine Anzahl von Umkehrbögen (23) miteinander verbunden sind, wobei die Anzahl der Umkehrbögen (23) um eins geringer ist als die Anzahl der seriell miteinander über die Umkehrbögen (23) verbundenen Rohrstrecken (21), und wobei die Umkehrbögen (23), anfangend mit einem ersten Umkehrbogen (23) in dem ersten Bereich (11), abwechselnd in dem ersten Bereich (11) und in dem zweiten Bereich (12) angeordnet sind.

7. Reaktor (100) nach Anspruch 6, bei dem der oder die in dem zweiten Bereich (12) angeordneten Umkehrbögen (23) in dem starren Verbindungselement (30) ausgebildet ist oder sind und bei dem die Rohrstrecken (21) sich ausgehend von dem Verbindungselement (30) in dem zweiten Bereich (12) zu dem ersten Bereich (11) erstrecken.

8. Reaktor (100) nach Anspruch 6 oder 7, bei dem das Verbindungselement (30) an die zuvor mit dem oder den Umkehrbögen (23) in dem zweiten Bereich (12) versehenen oder mit diesem oder diesen verbunden ausgebildeten Rohrabschnitte (21) angegossen ist.

9. Reaktor (100) nach Anspruch 6 oder 7, bei dem der oder die Umkehrbögen (23) in dem zweiten Bereich (12) in dem Verbindungselement (30) ausgebildet und die Rohrabschnitte (21) an das Verbindungselement (30) angeschweißt sind.

10. Reaktor (100) nach einem der vorstehenden Ansprüche, der als Reaktor zum Steamcracken ausgebildet ist.

11. Reaktor (200) nach Anspruch 1, bei dem die Rohrstrecken (22) jeweils eine Rohrstrecke (22) von mehreren Reaktionsrohren (20) umfassen, wobei die Rohrstrecken (22) innerhalb des Reaktorbehälters (10) fluidisch unverbunden nebeneinander angeordnet sind und jeweils mit einem Einspeiseabschnitt (24) in dem ersten Bereich und einem Entnahmeabschnitt (25) in dem zweiten Bereich verbunden sind.

12. Reaktor (200) nach Anspruch 11, der als Reaktor zur Dampfreformierung, zur Trockenreformierung oder zur katalytischen Dehydrierung von Alkanen ausgebildet ist.

13. Reaktor (100, 200) nach einem der vorstehenden Ansprüche, bei dem das Verbindungselement (30) und die Rohrstrecken (21, 22) aus demselben Material oder aus Materialien ausgebildet sind, deren elektrische Leitfähigkeiten sich um nicht mehr als 50%, bevorzugt nicht mehr als 30%, besonders bevorzugt nicht mehr als 10% voneinander unterscheiden, insbesondere aus Chromnickelstählen, die 0,1 bis 0,5 Gew.-% Kohlenstoff, 20 bis 50 Gew.-% Chrom, 20 bis 80 Gew.-% Nickel, 0 bis 2 Gew.-% Niob, 0 bis 3 Gew.-% Silicium, 0 bis 5 % Wolfram und 0 bis 1 Gew.-% anderer Komponenten aufweisen, bevorzugt 20 bis 40 Gew.-% Chrom, 20 bis 50 Gew.-% Nickel, 0 bis 10 Gew.-% Silicium, 0 bis 10 Gew.-% Aluminium und 0 bis 4 Gew.-% Niob, wobei die Gehalte der angegebenen Komponenten sich jeweils zu dem Nichteisenanteil ergänzen.

14. Reaktor (100, 200) nach einem der vorstehenden Ansprüche, bei dem das Verbindungselement (30) zumindest zum Teil von einem Leitelement (31) aus einem Material, das reich an Molybdän, Wolfram, Tantal, Niob und/oder Chrom oder hieraus gebildet ist und/oder das eine höhere spezifische elektrische Leitfähigkeit als das Material aufweist, aus dem das Verbindungselement gebildet ist, umgeben ist.

15. Verfahren zur Durchführung einer chemischen Reaktion unter Verwendung eines Reaktors (100, 200), der einen Reaktorbehälter (10) und ein oder mehrere Reaktionsrohre (20) aufweist, wobei eine Anzahl von Rohrstrecken (21, 22) des einen oder der mehreren Reaktionsrohre (20) jeweils zwischen einem ersten Bereich (11) und einem zweiten Bereich (12) in dem Reaktorbehälter (10) verlaufen, und wobei die Rohrstrecken (21, 22) in dem ersten Bereich (11) zur Beheizung der Rohrstrecken (21, 22) jeweils elektrisch mit den Phasenanschlüssen einer mehrphasigen Wechselstromquelle (50) verbunden werden, **dadurch gekennzeichnet, dass** ein Reaktor (100-500) verwendet wird, bei dem die Rohrstrecken (21, 22) in dem zweiten Bereich (12) insgesamt mittels eines einzigen starren Verbindungselements (30) oder gruppenweise mittels mehrerer starrer Verbindungselemente (30), das oder die einstückig mit dem einen oder den mehreren Reaktionsrohren (20) verbunden und innerhalb des Reaktorbehälters (10) angeordnet ist oder sind, elektrisch leitend miteinander verbunden sind.
